# FASCICULE DE BREVET EUROPEEN

(11) **EP 0 913 221 B1**
(45) Date de publication et mention de la délivrance du brevet: **28.11.2001**
(21) Numéro de dépôt: 98402545.2
(22) Date de dépôt: 14.10.1998
(51) Int. Cl.: B22F 9/16, C25C 5/02

(54) **Conditionnement de poudre de metal electrodeposee en milieu basique**
Behandlung elektrolytisch im basischen Milieu abgeschiedener Metallpulver
Conditioning of in basic media electrodeposited metal powder

(30) Priorité: 29.10.1997 FR 9713557
(43) Date de publication de la demande: 06.05.1999
(73) Titulaire: Sogepass, 57360 Amneville (FR)
(72) Inventeur: Rizet, Laurent, 74250 Viuz en Sallaz (FR); Charpentier, Pierre Emmanuel, 74250 Viuz en Sallaz (FR); Eusebe, Claude, 59500 Douai (FR); Marzouk, Hatem, 77210 Avon (FR); Rocchia, Louis, 57050 Le Ban St. Martin (FR); Vedrine, Henri, 45160 Olivet (FR)
(74) Mandataire: Ventavoli, Roger

(56) Documents cités:
- DE-A- 3 301 310
- FR-A- 2 510 141
- GB-A- 1 568 362
- US-A- 5 549 811
- DATABASE WPI Section Ch, Week 8938 Derwent Publications Ltd., London, GB; Class A22, AN 89-277060 XP002073084 & SU 1 468 976 A (IVAN CHEM TECH INST)
- NIRDOSH I ET AL: "BENCH SCALE INVESTIGATIONS ON THE ELCTROLYTIC RECOVERY OF ZINC POWDER FROM GALVANIZER'S ASH" HYDROMETALLURGY, vol. 20, no. 2, mai 1988, pages 203-217, XP002051571 AMSTERDAM, NE

## Description

La présente invention concerne le conditionnement d'une poudre métallique, de la poudre de zinc notamment, obtenue par électrodéposition en milieu basique.

L'opération d'électrodéposition considérée ici constitue préférentiellement la troisième et dernière étape d'un procédé électro-hydrométallurgique de traitement en continu par voie sodique (et plus généralement par voie basique) de co-produits industriels chargés en zinc, tels que par exemple des poussières d'aciérie électrique (ou analogue), procédé mieux connu désormais sous la dénomination de "procédé REZEDA".

Ce procédé, dont la littérature technique fait état désormais (voir par exemple l'article de la "Revue de Métallurgie" de Décembre 1995, ou FR-A-2 510 141, permet d'éliminer, sous forme stable non nocive pour l'environnement, les métaux lourds présents dans des effluents métallurgiques, comme les poussières d'aciéries électriques, contenant du zinc en quantité suffisante pour être valorisé sous sa forme métallique après extraction. Il consiste schématiquement à lixivier les matières à traiter dans une solution de soude de manière à dissoudre les métaux lourds (Zn,Pb,Cd,Cu...) autres que le fer, puis, après une séparation solide/liquide éliminant les oxydes de fer restés en suspension, à précipiter ces métaux lourds, hormis le zinc, par cémentation par du zinc métal en poudre ajouté, et à extraire ensuite le zinc dissous par électrolyse de la solution sodique. Cette récupération a lieu sur une batterie de cathodes sur lesquelles le zinc métal se dépose sous forme de poudre fine si les réglages des paramètres d'électrolyse sont correctement ajustés à cet effet.

Pour être valorisée industriellement, la poudre de zinc ainsi produite doit généralement pouvoir être livrée très pure sur le marché. Or, même après lavage prolongé à l'eau et séchage, la poudre ne titre qu'à 70-75% de zinc métal. De surcroît, comme elle risque de se consumer au contact de l'air, d'autant que le milieu est basique, l'adjonction habituelle de chromates destinés à la passiver génère jusqu'à 0.2% de chrome dans la poudre, ce qui la rend quasiment inapte à une utilisation en cémentation par exemple, tout en augmentant son prix de revient par ailleurs.

Nirdosh, I, et al, montrent dans l'article "Bench scale investigations on the electrolytic recovery of zinc powder from galvanizer's ash" (Hydrometallurgy, vol 20, n°2, mai 1998, pages 203-217) un procédé de conditionnement de poudre de zinc obtenue par électrodéposition en milieu basique où la poudre issue de l'électrolyse est lavée en milieu acide (pH=4.0-4.5) pour neutraliser l'alcali, rincée avec de l'eau, et séchée par évaporation sous vide.

La présente invention a pour but de parvenir à obtenir une poudre métallique purifiée et bien stable dans des conditions économiques satisfaisantes.

Avec cet objectif en vue, l'invention a pour objet un procédé de conditionnement de poudre de métal obtenue par électrodéposition en milieu basique caractérisé en ce que, à l'issue de la phase d'électrolyse, on effectue une suite de traitements consécutifs tous à l'abri de l'air (par exemple séquentiellement dans une enceinte étanche unique, tel qu'un filtre à cloche) qui consiste, et dans cet ordre, à soumettre tout d'abord la solution basique chargée en poudre métallique électrodéposée à une séparation solide/liquide, à soumettre ensuite la fraction solide recueillie à un cycle de lavages-essorages à l'eau (désoxygénée de préférence) sans nécessaire ajout d'agent de passivation et ce jusqu'à l'obtention d'une solution de lavage présentant un pH abaissé à une valeur voulue (autour de 9 par exemple), puis, après avoir pratiqué une nouvelle séparation solide/liquide, à effectuer sur la fraction solide humide recueillie une dessiccation par évaporation à basse température (de l'ordre de 20-30°C par exemple) et sous pression réduite (60 à 100 mm de Hg environ) jusqu'à l'obtention d'une poudre métallique fluide.

Comme on le comprend, l'invention réside donc, dans ses caractéristiques essentielles en un post-traitement de purification de la poudre de zinc électrodéposée issue d'un procédé de type "REZEDA", post-traitement qui consiste à travailler à l'abri de l'air sur de la poudre humide après l'avoir séparée, par lavage à l'eau et essorage, de la solution basique qui la mouillait à l'issue de la phase d'électrolyse, ce travail étant destiné, grâce à une évaporation sous vide, à la débarrasser ensuite totalement de son eau de lavage ainsi que de toute humidité résiduelle jusqu'à obtenir une poudre bien fluide, qui affiche alors un taux de zinc métal voisin de 98% et qui va pouvoir être alors durablement exposée à l'air sans risque pyrophorique aucun.

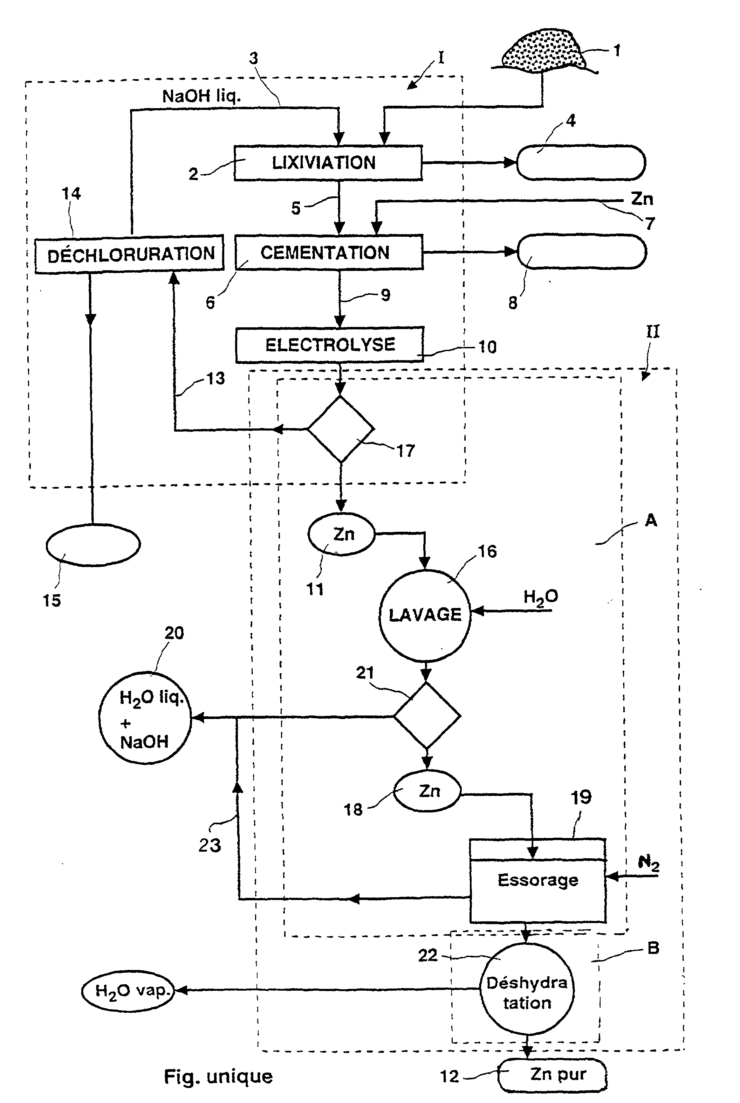

L'invention sera bien comprise et d'autres aspects et avantages ressortiront plus clairement au vu de la description qui suit donnée en référence à la figure unique annexée montrant un schéma fonctionnel du traitement de conditionnement selon l'invention mené directement à la suite du procédé "REZEDA" prémentionné de traitement électro-hydro-métallurgique de poussières d'aciérie électrique.

Dans ce contexte, on notera qu'il faut entendre en fait par "poussières d'aciérie électrique" non seulement les émissions pulvérulentes des fours à arcs électriques de la sidérurgie, mais tout effluent métallurgique, ou déchets industriels ou ménagers, contenant des métaux lourds et suffisamment chargé en zinc dissous pour justifier une récupération économiquement rentable de ce métal. Comme exemple de tels effluents ou déchets, on citera les solutions de décapage de tôles zinguées, les boues d'hydroxydes métalliques, ou les piles domestiques usagées.

Comme on le voit sur la figure, le traitement de conditionnement Il selon l'invention s'inscrit directement à la suite du procédé d'extraction de métaux lourds I (type REZEDA) par traitement électro-hydro-métallurgique des poussières d'aciérie électrique 1 en milieu basique (sodique ici). Sur la figure, seul est rappelé le principe général de ce procédé d'extraction selon un traitement continu en trois étapes successives et dans cet ordre: Lixiviation basique - Cémentation au zinc métal - Electrolyse de récupération du zinc métal.

Sous un débit de 2t/h par exemple, les poussières d'aciérie électrique 1, titrant classiquement plus de 20% en poids de zinc total et plus de 5% en poids de plomb total, sont introduites, via un mélangeur non représenté, dans un bac de lixiviation 2, pour y être mises en suspension dans une solution aqueuse de soude caustique 3, titrant par exemple 300g de NaOH par litre d'eau, et circulant sous un débit de 6 m³/h.

Le lixiviateur 2 est dimensionné pour laisser à la soude le temps de réagir avec les oxydes métalliques et former les hydroxydes de Pb, Cd, Zn, etc..., tous solubles en milieu basique. L'hydroxyde de fer, qui se forme également à partir des oxydes ferreux, reste lui sous forme insoluble, comme certains autres oxydes complexes du fer présents dans les poussières qui demeurent en l'état (les ferrites). Par une opération classique de séparation solide/liquide, dans un filtre-presse par exemple, la fraction solide ferrifère 4 est extraite en vue de son retour en usine en tant que matière première, ou est simplement stockée sur parc.

La solution alcaline 5, ainsi rendue limpide, mais chargée en métaux et sels dissous, parvient alors dans un bac de cémentation 6 dans lequel s'opère, par réaction "red-ox", le déplacement par du zinc des métaux lourds, comme le plomb, etc..., sous forme métal depuis leur forme soluble. Le zinc métallique de cémentation 7 est introduit dans le bac 6 à l'état pulvérulent et en quantité suffisante pour rendre complètes les réactions "red-ox" de déplacement des métaux à éliminer par précipitation. Le cément métallique 8 est alors extrait par séparation solide / liquide, au moyen d'un filtre également non représenté. La sous-verse liquide 9 obtenue est alors une solution alcaline d'hydroxyde de zinc prête à subir une électrolyse de récupération du zinc à l'état métallique.

Cette électrolyse s'opère dans une cuve électrolytique 10 par dépôt cathodique de zinc brut en poudre 11 qui, après traitement de purification II conforme à l'invention, donne une fine poudre de zinc purifiée et stabilisée 12. Une fraction de cette poudre peut être avantageusement réutilisée pour la cémentation 6, le reste pouvant être valorisé autrement. Quant à la solution sodée 13 récupérée à la sortie du bac d'électrolyse 10, après appoint de compensation des pertes, elle peut être recyclée en vue de servir à nouveau en lixiviation après une étape de déchloruration 14 qui permet, par précipitation des chlorures et sulfates 15, de maintenir en dessous d'un certain seuil de concentration les sels dissous inévitablement apportés par les effluents 1 à traiter.

En se portant à présent sur la demi-partie basse de la figure, on voit que le traitement de purification Il selon l'invention comprend deux étapes fonctionnelles principales successives, menées à l'abri de l'air (et sans ajout nécessaire de passivant pour la poudre de zinc).

Une étape de lavage A d'abord, destinée à enlever la soude, suivie d'une étape B de dessiccation de la poudre destinée à parfaire sa passivation. L'étape A consiste en une opération de repulpage à l'eau 16 d'un gâteau de zinc en poudre 11 résultant d'une filtration 17 menée à la sortie du bac d'électrolyse 10 sur une masse de poudre de zinc que l'on a décrochée de la surface de la cathode où elle s'était formée par électrodéposition. Cette filtration 17 s'opère sous atmosphère inerte, par exemple à l'aide d'un flux d'azote qui chasse l'air au dessus du liquide pour éviter que l'oxygène de l'air ne passe au travers du gâteau de zinc en fin de filtration. L'opération de repulpage subséquente 16 s'effectue avec de l'eau, déminéralisée de préférence, et avantageusement désoxygénée. Après une séparation liquide/solide 21 par filtration au terme du repulpage 16, la solution accuse de soude diluée 20 passe en sous-verse, et la sur-verse, formée par un gâteau de poudre de zinc humide 18, est essorée en 19 par tassement de la poudre sous flux d'azote, pour éliminer la soude résiduelle inévitablement présente dans le liquide interstitiel.

En pratique, l'ensemble des opérations successives prémentionnées (17-11-16-21-19) s'effectue de manière séquentielle dans une enceinte étanche unique dotée de toutes les entrées/sorties nécessaires. Cette unité peut être un filtre à cloche disponible dans le commerce sous la dénomination "GUEDU". Grâce à l'outil malaxeur de type "moulin à légumes" dont il est doté, le filtre "GUEDU" permet, par simple inversion du sens de rotation du malaxeur, de repulper le gâteau de zinc lors du lavage 16, ou de le tasser lors de l'essorage subséquent 17. On notera qu'un telle intégration de fonctions au sein d'un appareil unique étanche aux fins de mise à l'abri de l'air, devient ici un élément significatif de réduction des coûts d'équipement et de fonctionnement. On verra d'ailleurs dans la suite, que ce même appareil peut également servir pour la réalisation de l'étape B de dessiccation de la poudre de zinc.

On notera également que la séquence opératoire "pulpage 16-vidange 21-essorage 19" propre à l'étape de lavage A selon l'invention devra être renouvelée plusieurs fois au besoin, comme illustré par la boucle 23, jusqu'à l'obtention d'un pH de la solution de lavage 20 ramené à une valeur voulue prédéterminée, choisie entre 8 et 10 par exemple. Cette valeur de pH, choisie par l'opérateur en fonction de ses propres conditions locales d'exploitation, sera considérée comme une valeur-seuil en deça de laquelle la quantité de soude résiduelle dans la poudre humide issue de l'essorage 19 n'aura plus d'influence significative sur la stabilité à l'air de la poudre finale sèche 12.

Si on le souhaite, l'application d'ultrasons de puissance est ici tout à fait approprié pour accélérer au besoin l'opération de lavage 16 ou pour favoriser une désagrégation plus rapide de la poudre finale 12.

On notera également que l'eau de lavage 20 peut resservir en amont du procédé REZEDA pour le lavage des extraits solides ferrifères 4 issus de la lixiviation, ou comme appoint de soude et d'eau dans la boucle 13 de recirculation de la solution basique après électrolyse.

Après la phase A de repulpages-essorages répétés, la poudre subit la phase opératoire B de l'invention, constituée par une étape de dessiccation 22, dans lequelle le vide est créé. Les parois du filtre "GUEUX" sont alors chauffées modérément pour maintenir l'intérieur de l'enceinte à une température de 20-30°C, et un vide correspondant à une pression absolue de l'ordre de 65 mm de Hg y est réalisé par pompage. Dans ces conditions, l'humidité résiduelle de la poudre de zinc est éliminée par évaporation sous vide à basse température.

Le zinc, d'abord sous forme de grumeaux et de boulettes humides, est remué lentement par le malaxeur afin de renouveler le contact avec la paroi chauffée. Petit à petit, des envolées de zinc de plus en plus fréquentes sont constatées, la poudre devenant de plus en plus fluide. Il convient de veiller à ce que la pression ne remonte pas, car cela signifierait une présence de vapeur d'eau dans l'enceinte de dessiccation suite par exemple à un bouchage de la conduite de pompage (l'augmentation de la teneur de l'atmosphère en vapeur d'eau peut provoquer en effet une oxydation préjudiciable de la poudre). A la fin du séchage, la poudre de zinc est totalement fluide, il n'y a plus de trace de boulettes ou de grumeaux et les envolées de poudre ont cessé. L'enceinte de dessiccation 22 est alors isolée et remplie d'air jusqu'à pression ambiante afin de pouvoir l'ouvrir pour récupérer la masse de poudre de zinc 12. L'appareil est ainsi libéré en vue de la réception d'une nouvelle charge à traiter, dont on rappelle que la première opération à réaliser à l'abri de l'air réside dans la séparation solide/liquide 17 après le décrochage du dépôt de zinc sur l'unité cathodique du bac d'électrolyse 10.

La poudre de zinc finale 12 ainsi déshydratée est pure à près de 99% de zinc métal en poids et complètement passivée sans risque aucun d'inflammation ou même de combustion lente au contact de l'oxygène de l'air.

Le tableau ci-après donne les analyses chimiques en % pondéraux de la poudre de zinc sèche finale 12 obtenue au terme de cinq essais repérés A, B, C, D et E dans les cinq dernières colonnes. La première colonne de gauche donne la composition des poussières d'aciérie traitées. La deuxième colonne donne, à titre comparatif, la composition d'une poudre de zinc obtenue avec l'utilisation d'un passivant selon des techniques de lavage et séchage habituelle de poudres, telles qu'usitées avant l'invention par le demandeur lui-même.

| Poussières d'aciérie électr.(1) | poudre de Zn avec passivant | ESSAIS | A | B | C | D | E |
|---|---|---|---|---|---|---|---|
| / | 98,3 | Zn métal | 98.3 | 98.6 | 97.9 | 97.8 | 97.9 |
| 20 | / | Fe % | 0.01 | 0.012 | 0.011 | 0.015 | 0.014 |
| 5 | / | Pb % | 0.028 | 0.023 | 0.016 | 0.018 | 0.015 |
| 0.3 | / | Cu % | 0.0005 | 0.0005 | 0.0005 | 0.0005 | 0.0005 |
| 0.1 | / | Cd % | < à 0.0001 | 0.0001 | < à 0.0001 | < à 0.0001 | < à 0.0001 |
| 3 | / | Na % | 0.095 | 0.0072 | 0.012 | 0.011 | 0.013 |
| 3 | / | Cl % | < à 0.1 | < à 0.1 | < à 0.1 | < à 0.1 | < à 0.1 |
| 0.3 | 0.22 | Cr % | ≈ 0.01 | ≈ 0.01 | ≈ 0.01 | ≈ 0.01 | ≈ 0.01 |
| 21 | ............ | Zn Tot. | 99.6 | 99.7 | 99.6 | 99.6 | 99.6 |

La poussière de zinc, titrant à peine seulement 70 % de Zn métal avant le traitement selon l'invention (poudre 11) affiche systématiquement autour de 98% après traitement(poudre finale 12), soit un gain de 28 points.

Bien que non consignée dans ce tableau, on notera une présence faible, mais constante de ZnO autour de 2 à 3% dans la poudre purifiée 12 qui s'explique par le phénomène d'oxydation lente naturelle du zinc au contact de l'air, ou de l'eau. Cette oxydation, au demeurant que momentanée, est cependant essentielle à la stabilité de la poudre dans le temps, car elle se traduit, à son terme, par la formation d'une fine couche d'oxyde qui entoure les grains et qui constitue une enveloppe passivante.

Cette faible teneur en ZnO, alliée à près de 99 % en Zn métal, rend la poudre de zinc 12 issue du post-traitement selon l'invention tout à fait apte à être utilisée dans l'industrie des peintures, ou celle de la chimie, pour ne citer que quelques exemples de valorisation devenues ainsi possibles.

Il va de soi que l'invention ne se limite pas aux exemples décrits, mais s'étend à d'autres variantes ou équivalents dans la mesure où est respectée sa définition donnée dans les Revendications qui suivent.

## Revendications

1. Procédé de conditionnement de poudre de métal obtenue par électrodéposition en milieu basique, **caractérisé en ce que**, à l'issue de la phase d'électrolyse (10), on effectue une suite de traitements consécutifs, tous à l'abri de l'air, qui consiste, et dans cet ordre, à soumettre tout d'abord la solution basique chargée en poudre métallique électrodéposée à une séparation solide/liquide (17), à soumettre ensuite la fraction solide recueillie (11) à un cycle de lavages-essorages à l'eau (16-19) sans nécessaire ajout d'agent de passivation et ce jusqu'à l'obtention d'une solution de lavage (20) présentant un pH abaissé à une valeur voulue, puis, après avoir pratiqué une nouvelle séparation solide/liquide (21), à effectuer sur la fraction solide humide recueillie (18) une dessiccation (22) par évaporation sous vide à basse température jusqu'à l'obtention d'une poudre métallique fluide

2. Procédé selon la revendication 1, **caractérisé en ce que** l'on effectue l'ensemble desdites opérations de conditionnement à l'abri de l'air de manière séquentielle dans une enceinte étanche unique.

3. Procédé selon la revendication 2, **caractérisé en ce que** l'on effectue l'ensemble desdites opérations de conditionnement à l'abri de l'air de manière séquentielle dans un filtre à cloche de type "GUEDU".

4. Procédé selon la revendication 1, **caractérisé en ce que** l'on mène l'opération de dessiccation (22) sous une température de 20-30°C environ.

5. Procédé selon la revendication 1 ou 3, **caractérisé en ce que** l'on mène l'opération de dessiccation (22) sous une pression réduite de l'ordre de 65 mm de Hg.

6. Procédé selon la revendication 1, **caractérisé en ce que** la valeur voulue du pH à atteindre pour la solution de lavage (20) est de 9 à 9.5 environ.

7. Procédé selon la revendication 1, **caractérisé en ce qu'**on l'applique à une poudre métallique électrodéposée au cours d'un traitement électro-hydrométallurgique continu en boucle par voie basique d'effluents métallurgiques comprenant une première étape de lixiviation basique (2), suivie d'une étape (6) d'épuration par cémentation de la solution recueillie et une dernière étape d'électrolyse (10) de la solution cémentée pour y déposer ladite poudre métallique, et **en ce qu'**on réutilise les eaux de lavage (20) dans ledit traitement électro-hydrométallurgique.

8. Procédé selon la revendication 7, **caractérisé en ce que** l'on réutilise les eaux de lavage (20) dans une phase (4) de lavage des extraits solides ferrifères issus de l'étape de lixiviation basique (2)

9. Procédé selon la revendication 7 ou 8, **caractérisé en ce que** l'on réutilise les eaux de lavage (20) dans la boucle de recirculation de la solution basique (13) à l'issue de l'étape d'électrolyse (10).

10. Procédé selon l'une quelconque des revendications précédentes **caractérisé en ce qu'**on l'applique à de la poudre de zinc électrolytique (11).

## Patentansprüche

1. Verfahren zur Aufbereitung eines durch elektrolytische Metallabscheidung in basischem Milieu gewonnenen Metallpulvers, **dadurch gekennzeichnet, dass** nach Abschluss der Elektrolysephase (10) eine Reihe aufeinanderfolgender Behandlungen, alle unter Luftabschluss, vorgenommen werden, die in dieser Reihenfolge darin bestehen, dass zuerst die basische Lösung, die das durch elektrolytische Metallabscheidung gewonnene metallische Pulver enthält, einer Fest/Flüssig-Trennung (17) unterzogen wird, dass anschließend die gesammelte feste Fraktion (11) einem Zyklus des Waschens mit Wasser und Trocknens (16-19) unterzogen wird, ohne dass der Zusatz eines Passivierungsmittels notwendig wäre und bis man eine Waschlösung (20) erhält, die einen auf einen gewünschten Wert abgesenkten pH-Wert aufweist, und dass dann nach einer neuerlichen Fest/Flüssig-Trennung (21) die gesammelte feuchte feste Fraktion (18) einer Entwässerung (22) durch Verdampfung im Vakuum bei niedriger Temperatur unterzogen wird, bis ein fließfähiges metallisches Pulver erzielt wird.

2. Verfahren nach Anspruch 1, **dadurch gekennzeichnet, dass** alle genannten Arbeitsgänge zur Aufbereitung unter Luftabschluss auf sequentielle Weise in einer einzigen dichten Umschließung ausgeführt werden.

3. Verfahren nach Anspruch 2, **dadurch gekennzeichnet, dass** alle genannten Arbeitsgänge zur Aufbereitung unter Luftabschluss auf sequentielle Weise in einem Filter mit Glocke vom Typ "GUEDU" ausgeführt werden.

4. Verfahren nach Anspruch 1, **dadurch gekennzeichnet, dass** der Entwässerungsvorgang (22) bei einer Temperatur von etwa 20-30°C ausgeführt wird.

5. Verfahren nach Anspruch 1 oder 3, **dadurch gekennzeichnet, dass** der Entwässerungsvorgang (22) unter reduziertem Druck in der Größenordnung von 65 mmHg ausgeführt wird.

6. Verfahren nach Anspruch 1, **dadurch gekennzeichnet, dass** der gewünschte pH-Wert, der für die Waschlösung (20) erreicht werden soll, etwa 9 bis 9,5 beträgt.

7. Verfahren nach Anspruch 1, **dadurch gekennzeichnet, dass** es auf ein Metallpulver angewendet wird, das durch elektrolytische Metallabscheidung im Lauf einer schleifenförmigen kontinuierlichen elektrohydrometallurgischen Behandlung von Abgängen aus der Metallindustrie auf basischem Weg gewonnen wird, umfassend einen ersten Schritt zur basischen Auslaugung (2), gefolgt von einem Schritt (6) zur Reinigung durch Zementierung der gesammelten Lösung und einen letzten Schritt der Elektrolyse (10) der zementierten Lösung, um das genannte Metallpulver abzuscheiden, und dass das Waschwasser (20) in der genannten elektrohydrometallurgischen Behandlung wiedervenendet wird.

8. Verfahren nach Anspruch 7, **dadurch gekennzeichnet, dass** das Waschwasser (20) in einer Phase (4) des Waschens der eisenhaltigen festen Extrakte aus dem Schritt der basischen Auslaugung (2) wiederverwendet wird.

9. Verfahren nach Anspruch 7 oder 8, **dadurch gekennzeichnet, dass** das Waschwasser (20) in der Schleife (13) zur Rückführung der basischen Lösung aus dem Elektrolyseschritt (10) wiederverwendet wird.

10. Verfahren nach einem der vorhergehenden Ansprüche, **dadurch gekennzeichnet, dass** es auf Pulver aus Elektrolytzink (11) angewendet wird.

## Claims

1. Process for conditioning a metal powder obtained by electrodeposition in basic medium, **characterized in that**, after the electrolysis phase (10), a series of consecutive treatments is carried out, all in the absence of air, which consists, and in the following order, in firstly subjecting the basic solution charged with electrodeposited metal powder to a solid/liquid separation (17), next in subjecting the collected solid fraction (11) to a cycle of water washing/draining steps (16 - 19) without the need to add a passivation agent and until a washing solution (20) having a pH reduced to a desired value has been obtained, and then, after having performed a new solid/liquid separation (21), in carrying out, on the wet solid fraction (18) collected, a drying operation (22) by vacuum evaporation at low temperature until a fluid metal powder is obtained.

2. Process according to Claim 1, **characterized in that** all of the said conditioning operations are carried out in the absence of air in a sequential manner in a single sealed chamber.

3. Process according to Claim 2, **characterized in that** all of the said conditioning operations are carried out in the absence of air in a sequential manner in a bell filter of the "GUEDU" type.

4. Process according to Claim 1, **characterized in that** the drying operation (22) is performed at a temperature of approximately 20 - 30°C.

5. Process according to Claim 1 or 3, **characterized in that** the drying operation (22) is performed at a reduced pressure of around 65 mm.Hg.

6. Process according to Claim 1, **characterized in that** the desired value of the pH to be achieved in the washing solution (20) is approximately 9 to 9.5.

7. Process according to Claim 1, **characterized in that** it is applied to a metal powder electrodeposited during a loop-type continuous electrohydrometallurgical treatment by basic route of metallurgical effluents, comprising a first step of basic leaching (2) followed by a step (6) of cementation purification of the collected solution and a final step (10) of electrolysis of the cemented solution in order to deposit the said metal powder therein and **in that** the washings (20) are reused in the said electrohydrometallurgical treatment.

8. Process according to Claim 7, **characterized in that** the washings (20) are reused in a phase (4) for washing the ferriferous solid matter resulting from the basic leaching step (2).

9. Process according to Claim 7 or 8, **characterized in that** the washings (20) are used in the basic solution recirculation loop (13) after the electrolysis step (10).

10. Process according to any one of the preceding claims, **characterized in that** it is applied to electrolytic zinc powder (11).
